# EUROPEAN PATENT APPLICATION

(11) **EP 2 708 998 A2**
(43) Date of publication of application: **19.03.2014**
(21) Application number: 13178600.6
(22) Date of filing: 30.07.2013
(51) Int. Cl.: G06F 3/0481, G06F 3/0482, G06F 3/0488, G06F 3/0486

(54) **Method and apparatus for displaying icons on mobile terminal**

(30) Priority: 13.09.2012 KR 20120101322
(71) Applicant: Samsung Electronics Co., Ltd, Gyeonggi-do 443-742 (KR)
(72) Inventor: Kim, Jinyup, 443-742 Gyeonggi-do (KR)
(74) Representative: Nederlandsch Octrooibureau

(57) **Abstract**

A method and an apparatus for displaying icons on a mobile terminal are provided. The method of displaying icons in a mobile terminal includes displaying an application execution screen, receiving a display termination command with respect to an application, generating a thumbnail image with respect to an execution screen of the application when the display termination command is received, converting the thumbnail image to display a quick icon, and displaying the quick icon.

## Description

### BACKGROUND OF THE INVENTION

### 1. Field of the Invention:

The present invention relates to a method and an apparatus for displaying icons on a mobile terminal. More particularly, the present invention relates to an apparatus and a method for generating a thumbnail image for a final execution screen of an application and for displaying the generated final execution screen of an application as a quick icon.

### 2. Description of the Related Art:

In recent years, the number of types of application software (e.g., applications which may be installed in a mobile terminal) has significantly increased. The significant increase in the number of types of application software may be attributed to a user being enabled to directly install various applications as well as an electronic note application and a memo application provided with the mobile terminal as a default. In this manner, as the number of applications provided from the mobile terminal is increased, a user interface capable of conveniently managing and using the applications is essential.

An icon is generally used by a user interface for displaying an indication as to applications installed on the mobile terminal. When the user executes the icon, the mobile terminal displays an initial application screen corresponding to the application associated with the executed icon. When a corresponding application is again executed within a predetermined time after the specific application is terminated, a screen before termination is displayed and selection of application by the user is impossible.

Further, the related art has a problem in that it is difficult to check an existing execution screen of an application corresponding to an icon before touching and executing a corresponding icon. Accordingly, there is a need for a method capable of efficiently managing icons of many applications in a mobile terminal such as a smart phone.

Therefore, a need exists for an apparatus and method for generating a quick icon for an application as a thumbnail image with respect to a final execution screen of the application, and for displaying a final execution screen when a user executes a quick icon.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method of generating a quick icon for an application as a thumbnail image with respect to a final execution screen of the application and displaying a final execution screen when a user executes a quick icon, and an apparatus thereof.

In accordance with an aspect of the present invention, a method of displaying icons in a mobile terminal is provided._The method includes displaying an application execution screen, receiving a display termination command with respect to an application, and generating a thumbnail image with respect to an execution screen of the application when the display termination command is received, converting the thumbnail image to a quick icon, and displaying the quick icon.

In accordance with another aspect of the present invention, the method may further include: receiving an execution command with respect to the quick icon, and displaying the execution screen of the application when the display termination command is received.

In accordance with another aspect of the present invention, a mobile terminal for displaying icons is provided. The mobile terminal includes a display unit for displaying an application execution screen, and a controller for determining whether a display termination command with respect to the application is received, for generating a thumbnail image with respect to an execution screen of the application when the display termination command is received, for converting the generated thumbnail image to a quick icon, and for controlling to display the quick icon.

In accordance with another aspect of the present invention, the controller may determine whether an execution command with respect to the quick icon is received, and control to display the execution screen of the application when the display termination command is received.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects , features, and advantages of certain exemplary embodiments of the present invention will be more apparent from the following description taken in conjunction with the accompanying drawings, in which:

FIG. 1 is a block diagram illustrating an internal configuration of a mobile terminal according to an exemplary embodiment of the present invention;

FIG. 2 is a flowchart illustrating a method of displaying and executing a quick icon according to an exemplary embodiment of the present invention;

FIGS. 3A to 3D are diagrams illustrating a procedure of displaying a quick icon according to an exemplary embodiment of the present invention;

FIGS. 4A to 4D are diagrams illustrating a procedure of displaying a final execution screen of an application by executing a quick icon according to an exemplary embodiment of the present invention;

FIGS. 5A and 5B are diagrams illustrating an example of a detailed graphic interface displaying a quick icon together with a normal icon according to an exemplary embodiment of the present invention;

FIGS. 6A and 6B are diagrams illustrating an example of a detailed graphic interface to display a quick icon by substituting a normal icon with the quick icon according to an exemplary embodiment of the present invention;

FIGS. 7A and 7B are diagrams illustrating an example of a detailed graphic interface which displays a quick icon in an inactive state and changes the quick icon to an active state according to an exemplary embodiment of the present invention;

FIGS. 8A and 8Bare diagrams illustrating an example of a detailed graphic interface which displays a quick icon on a page different from a normal icon according to an exemplary embodiment of the present invention;

FIGS. 9A to 9C are diagrams illustrating an example of a detailed graphic interface which displays a quick icon on a layer different from a normal icon according to an exemplary embodiment of the present invention; and

FIGS. 10A to 10C are diagrams illustrating an example of a detailed graphic interface which displays a plurality of quick icons connected to a predetermined execution state of an application in a stacked form and a lattice form according to an exemplary embodiment of the present invention.

Throughout the drawings, it should be noted that like reference numbers are used to depict the same or similar elements, features, and structures.

### DETAILED DESCRIPTION OF Exemplary EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

As used in the specification, the term "icon" refers to a unit (e.g., an element) which is displayed on a display screen of a mobile terminal in order to identify or execute applications, folders, widgets, and the like. In this case, the icon may be displayed with a predetermined shape, color, and the like, or a combination thereof.

The term "quick icon" corresponds to a symbol designating a predetermined execution state of an application, and refers to a unit which is displayed on a display screen in order to provide the execution state of the application.

The term "normal icon" is a unit which is displayed on a display screen in order to identify or execute an application, which refers to an identification cover of a predetermined application according to the related art.

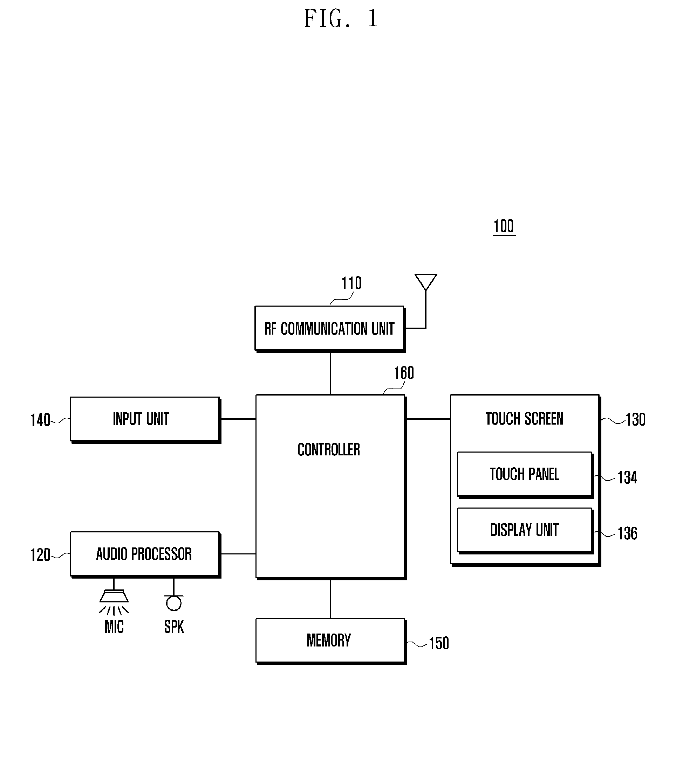

FIG. 1 is a block diagram illustrating an internal configuration of a mobile terminal according to an exemplary embodiment of the present invention.

Referring to FIG. 1, the mobile terminal 100 may include a Radio Frequency (RF) communication unit 110, an audio processor 120, a touch screen 130, an input unit 140, a memory 150, and a controller 160.

The RF communication unit 110 performs a transceiving function of corresponding data for wireless communication of the mobile terminal 100. The RF communication unit 110 may include an RF transmitter for up-converting a frequency of a transmitted signal and for amplifying the converted signal, and an RF receiver for low-noise-amplifying a received signal and for down-converting the amplified signal. The RF communication unit 110 receives data through a wireless channel and outputs the received data to the controller 160, and transmits data outputted from the controller 160 through the wireless channel.

The audio processor 120 may include a codec. The codec may include a data codec processing packet data and an audio codec processing an audio signal such as a voice. The audio processor 120 may convert a digital audio signal into an analog audio signal through the audio codec and plays the analog audio signal through the speaker SPK. The audio processor 120 may convert an analog audio signal from the microphone MIC into a digital audio signal, and may convert the analog audio signal into a digital audio signal through an audio codec.

The touch screen 130 includes a touch panel 134 and a display unit 136. The touch panel 134 detects a touch input of the user. The touch panel 134 may be configured by a touch detection sensor such as a capacitive overlay sensor, a resistive overlay sensor, an infrared beam sensor, a pressure sensor, and the like. According to exemplary embodiments of the present invention, the touch panel 134 may be configured to include various types of sensor devices capable of detecting contact or pressure of an object.

The touch panel 134 detects a touch input of the user, and generates and transmits a detection signal to the controller 160. The detection signal includes coordinates data corresponding to the touch input by the user. When the user inputs a touch location moving operation, the touch panel 134 generates and transmits a detection signal including coordinate data of a touch location moving path to the controller 160.

According to exemplary embodiments of the present invention, the touch panel 134 may detect a command for executing the normal icon or the quick icon with respect to a predetermined application. According to exemplary embodiments of the present invention, the touch panel 134 may detect a command for calling a page or a layer on which the quick icon is displayed. In addition, the touch panel 134 may detect a command for activating the quick icon displayed in an inactive state.

The display unit 136 may be configured by a Liquid Crystal Display (LCD), an Organic Light Emitting Diode (OLED), an Active Matrix Organic Light Emitting Diode (AMOLED), and the like. The display unit 136 visually provides a menu of the mobile terminal 100, input data, function setting information and other various information to the user. According to exemplary embodiments of the present invention, the display unit 136 performs a function of displaying an execution screen of an icon and an application. The mobile terminal 100 may be configured to include the touch screen as illustrated above. However, exemplary embodiments of the present invention are not limited to a mobile terminal 100 including the touch screen. According to exemplary embodiments of the present invention, in the context of a mobile terminal having no touch screen, the touch screen 130 shown in FIG. 1 may be transformed and applied to perform only a function of the display unit 136. Instead, the input unit 140 performs a function of the touch panel 134.

The input unit 140 receives an input of the user for controlling the mobile terminal 100 and generates and transfers an input signal to the controller 160. The input unit 140 may be configured by a key pad including a numeric key and an arrow key, and may be configured by a predetermined function key provided at one side of the mobile terminal 100. According to exemplary embodiments of the present invention, the mobile terminal 100 may perform all operations by only the touch screen 130. In this case, the touch panel 134 may perform a function of the input unit 140.

According to exemplary embodiments of the present invention, particularly, the input unit 140 may detect a command for executing a normal icon or a quick icon with respect to a predetermined application, a command for calling a page or a layer on which the quick icon is displayed, a command for activating the quick icon displayed in an inactive state, and/or the like.

The memory 150 stores programs and data necessary for an operation of the mobile terminal 100. The memory 150 may be divided into a program area and a data area.

The program area may store a program controlling an overall operation of the mobile terminal 100, and a program provided with default from the mobile terminal 100 such as an Operating System (OS) for booting the mobile terminal 100. In addition, the program area of the memory 150 may include application separately installed by the user such as, for example, a game application, an execution application of a Social Network Service (SNS), and the like.

The data area may store data generated according to use of the mobile terminal 100, images, moving pictures, phone-books, audio data, and the like. Particularly, according to exemplary embodiments of the present invention, the data area may store path data for a predetermined execution state of an application and a thumbnail image of a corresponding execution screen.

The controller 160 controls an overall operation with respect to respective constituent elements of the mobile terminal 100. According to exemplary embodiments of the present invention, the controller 160 determines a type of a user input received by the input unit 140. When the user input is a display termination command with respect to a currently executed application, the controller 160 controls to generate an execution screen when the display termination command is received as a thumbnail image. Further, the controller 160 converts the thumbnail image into the quick icon, and connects an execution state of a corresponding application when the display termination command is received to the quick icon.

The controller 160 determines whether the user input corresponds to a quick icon execution command. When the user input corresponds to the quick icon execution command, the controller 160 controls to display a final application execution screen. For example, the controller 160 executes the application according to an execution state of the application connected to the quick icon.

According to exemplary embodiments of the present invention, the controller 160 may display the quick icon according to various settings. As described above, because the quick icon displays a final execution screen of an application, the user may intuitively recognize an execution state of the application.

For example, the controller 160 may display the quick icon together with the normal icon of the application, and may display the quick icon by substituting the normal icon. As another example, the controller 160 may transparently display a quick icon in an inactive state. When receiving an activation command, the controller 160 may clearly display the quick icon and may display the quick icon on a page or a layer separately from the normal icon. Further, the controller 160 may generate a plurality of execution screens of an application as a thumbnail image and may convert the thumbnail image into a plurality of quick icons. The quick icons may be connected to respective execution states of the application. In this case, the controller 160 may display the quick icons to have a stacked form, and control to release the stacked form such that the quick icons are displayed respectively.

In this manner, a detailed example of a graphic interface for displaying and executing a quick icon will be described with reference to the accompanying drawings later.

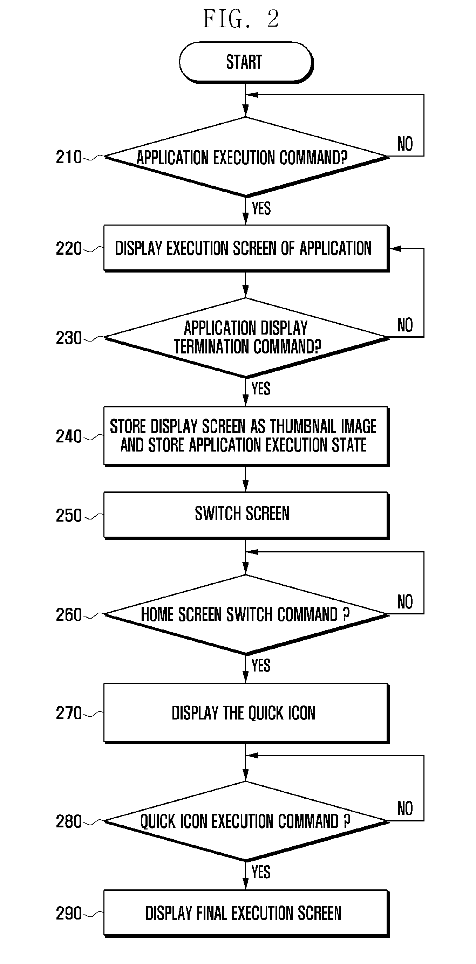

FIG. 2 is a flowchart illustrating a method of displaying and executing a quick icon according to an exemplary embodiment of the present invention.

Referring to FIG. 2, in step 210, a controller 160 determines whether a predetermined application execution command is received. If the controller 160 determines that the predetermined application execution command is not received in step 210, then the controller 160 continues to poll for receipt of the application execution command. In contrast, if the controller 160 determines that the predetermined application execution command is received in step 210, then the controller 160 proceeds to step 220.

In step 220, controller 160 executes an application and controls to display an execution screen of the application.

In step 230, the controller 160 determines whether a user input corresponds to an application display termination command. For example, the controller 160 determines whether an application display terminal command is received.

In this case, the controller 160 may set the display termination command to include a command switching an application executed as a foreground to a background as well as the application termination command.

In addition, according to exemplary embodiments of the present invention, the controller 160 may set the display termination command to include a command for changing a predetermined execution state of the application. For example, when the user changes execution of a first sound source to execution of a second sound source in an application of a music player, the controller 160 may identify such a change in the execution as the display termination command.

As another example, when a user of an e-book application executes page 38 of a first electronic book and changes to execute page 20 of a second electronic book, the controller 160 may identify the change in execution of the pages or the change in the execution of the specific electronic book as the display termination command.

Further, if the user input is a command for changing a state of an application display screen at a corresponding time without being limited to the foregoing example, the controller 160 may set the command to be included in the display termination command.

If the controller 160 determines that the application display terminal command is not received in step 230, then the controller 160 returns to step 220.

In contrast, if the controller 160 determines that the application display termination command is received in step 230, then the controller 160 proceeds to step 240 in which the controller 160 may store a display screen at the time point of receiving the display termination command as a thumbnail image, and may store an application execution state at a corresponding time point. Further, the controller 160 may switch the thumbnail image to a quick icon, and may connect the quick icon to the execution state.

In step 250, a display screen is switched and a predetermined function of the mobile terminal is executed.

In step 260, the controller 160 determines whether the user inputs a home screen switch command. For example, the controller 160 determines whether the user presses a home button to request switching of a home screen.If the controller 160 determines that the user has not input the home screen switch command in step 160, then the controller 160 may continue to poll for reception for input of the home screen switch command.

In contrast, if the controller 160 determines that the user inputs the home screen switch command in step 260, then the controller 160 proceeds to step 270 in which the controller 160 may display the quick icon in various schemes.

In step 270, the controller 160 may display the quick icon together with a normal icon of an application, and may display the quick icon by substituting the normal icon by the quick icon. As another example, the controller 160 may transparently display a quick icon in an inactive state. When receiving an activation command, the controller 160 may clearly display the quick icon, and may display the quick icon on a page or a layer separately from the normal icon.

Further, the controller 160 may generate a plurality of execution screens of an application as a thumbnail image and may convert the thumbnail image into a plurality of quick icons. The quick icons may be connected to respective execution states of the application. In this case, the controller 160 may display the quick icons to have a stacked form, and control to release the stacked form so that the quick icons are displayed respectively.

In step 280, if the user touches the quick icon to request execution of the quick icon, the controller 160 may call an execution state of an application connected to the quick icon. For example, in step 280, the controller 160 may determine whether a quick icon execution command is received. If the quick icon execution command is received, the controller 160 may call the execution state of the application connected to the quick icon.

In step 290, the controller 160 may control to display an execution state connected to the quick icon, (for example, an application execution screen) when a display termination command of step 230 is received in step 290.

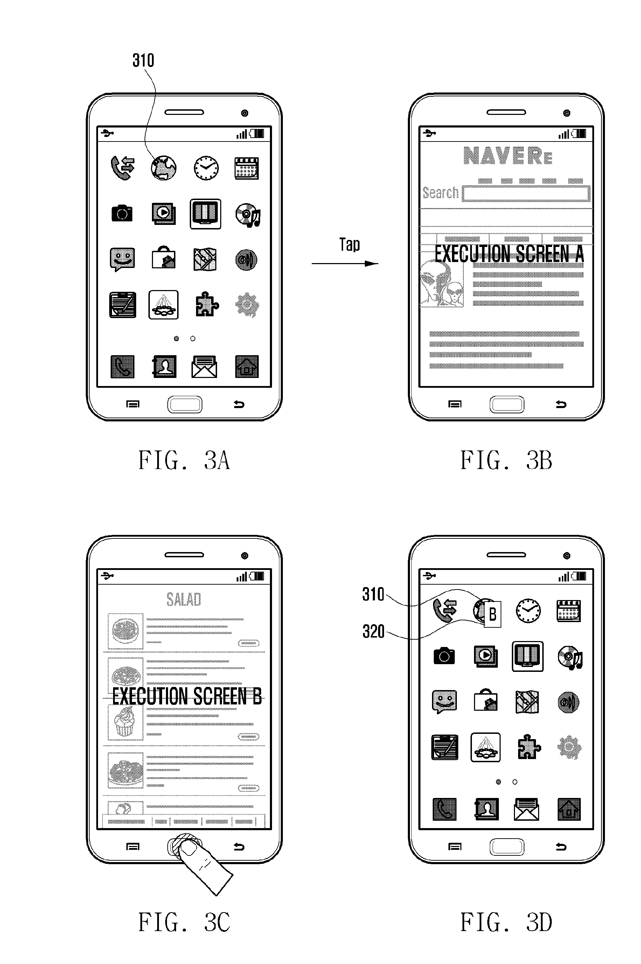

FIGS. 3A to 3D are diagrams illustrating a procedure of displaying a quick icon according to an exemplary embodiment of the present invention.

Referring to FIGS. 3A and 3B, a state in which icons for an application are displayed is illustrated in FIG. 3A. In this case, when the user selects (taps) a normal icon 310 for a predetermined application, a preset initial execution screen A of a corresponding application is displayed as illustrated in FIG. 3B.

Referring to FIGS. 3C and 3D, when the user presses a home button in a state in which an execution screen B is displayed as illustrated in FIG. 3C, the quick icon 320 may be displayed together with the normal icon 310 of the application as illustrated in FIG. 3D.

The quick icon 320 is displayed as a thumbnail image of an execution screen B when a home button is received. Through the above scheme, the user may intuitively check a final execution state of the application executed by the user. Further, the quick icon 320 may be connected to an execution state of a corresponding application for an execution screen B.

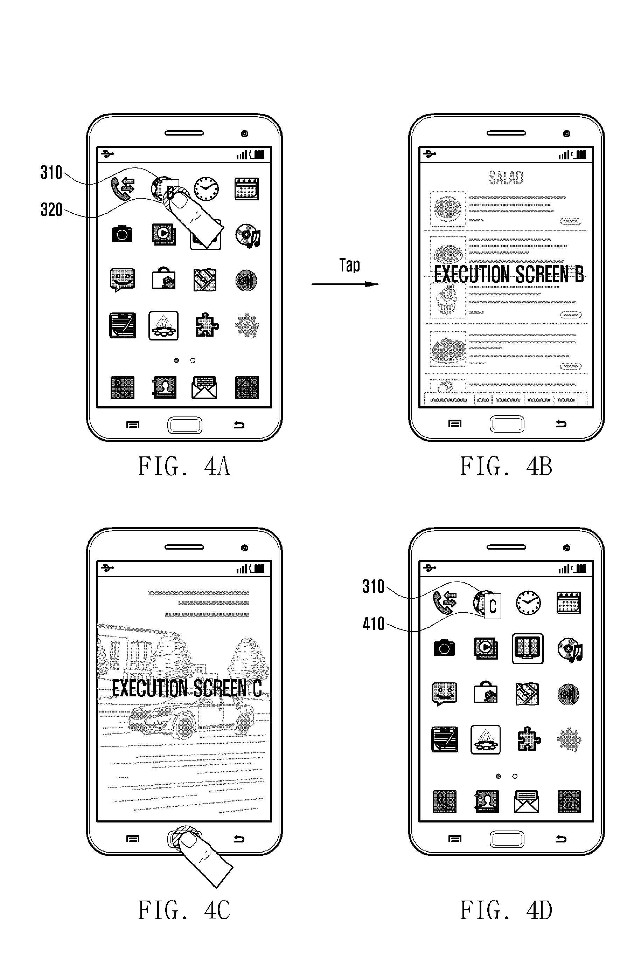

FIGS. 4A to 4D are diagrams illustrating a procedure of displaying a final execution screen of an application by executing a quick icon according to an exemplary embodiment of the present invention.

Referring to FIGS. 4Aand 4B, a state in which the quick icon is displayed together with a normal icon of an application is illustrated in FIG. 4A. In this case, when the user executes (taps) a quick icon 320 for an application corresponding to a normal icon 310, an execution screen B corresponding to (e.g., identical to) the thumbnail image of the quick icon 310 is displayed as illustrated in FIG. 4B. Simultaneously, an execution state of an application connected to the execution screen B is called.

Referring to FIGS. 4C and 4D, when the user presses a home button in a state in which the execution screen C is displayed as illustrated in FIG. 4C, the quick icon 410 connected to an execution state of FIG. 4C is displayed together with the normal icon 310, as illustrated in FIG. 4D. Next, when the user executes the quick icon 410, the execution screen C may be displayed in a state of FIG. 4C.

Referring to FIGS. 4A-4D, at least one quick icon may be connected to a plurality of execution states with respect to one application (e.g., the quick icon320 corresponds to an execution state associated with execution screen B, and the quick icon410 corresponds to an execution state associated with execution screen C). In this case, the controller 160 may manage respective quick icons to be connected to a specific execution state of an application.

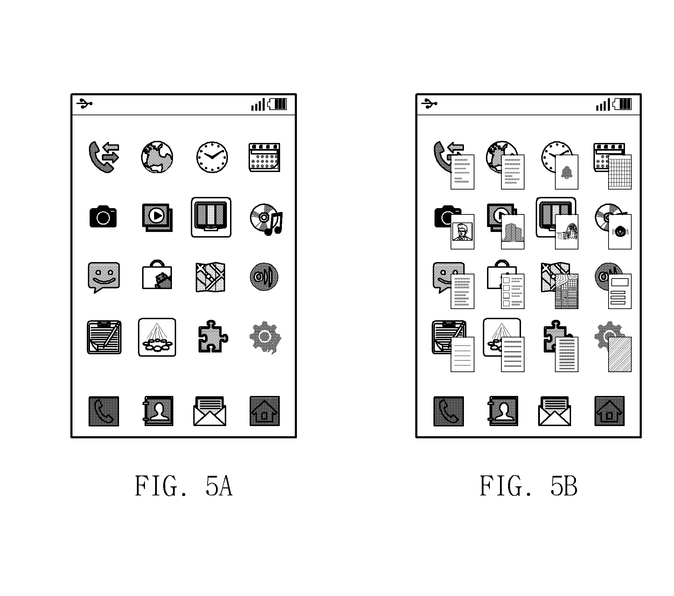

FIGS. 5A and 5B are diagrams illustrating an example of a detailed graphic interface displaying a quick icon together with a normal icon according to an exemplary embodiment of the present invention.

Referring to FIG. 5A, a state in which a normal icon of an application is displayed is illustrated. In this state, the controller 160 may generate a quick icon with respect to a specific execution state of an application corresponding to the normal icon.

Referring to FIG. 5B, an example of a graphic interface displaying a quick icon connected to a predetermined execution state of a specific application in this manner is illustrated. FIG. 5B illustrates a state in which quick icons are displayed together with the normal icon. In this case, the controller 160 may display the quick icon as a thumbnail image with respect to a screen displaying the execution state of an application.

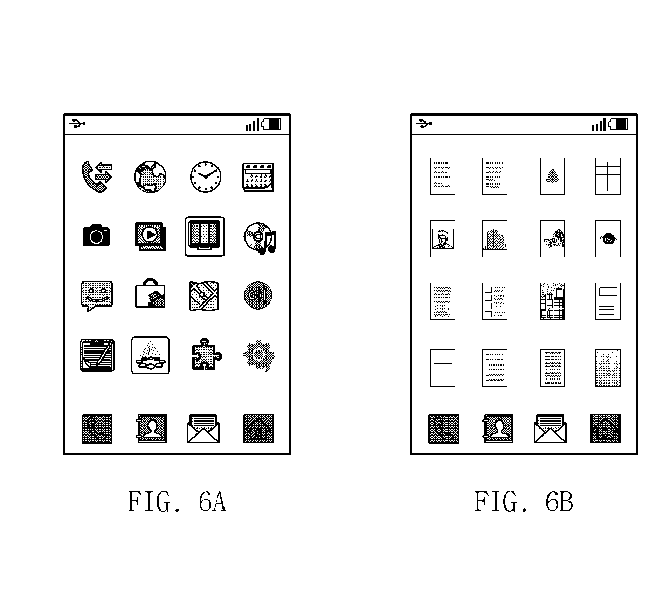

FIGS. 6A and 6B are diagrams illustrating an example of a detailed graphic interface to display a quick icon by substituting a normal icon with the quick icon according to an exemplary embodiment of the present invention.

Referring to FIG. 6A a state in which a normal icon of an application is displayed is illustrated. In this state, the controller 160 may generate a quick icon with respect to a specific execution state of an application corresponding to the normal icon as illustrated above.

Referring to FIG. 6B, an example of a graphic interface displaying a quick icon, and only a quick icon may be displayed at a position at which the normal icon is displayed is illustrated. In this case, because the quick icon is displayed as a thumbnail image with respect to a specific execution screen of an application, the user may recognize a type and an execution state of the application by only a quick icon without the normal icon. For example, according to exemplary embodiments of the present invention, the quick icon may be displayed so as not to be overlaid with the corresponding normal icon.

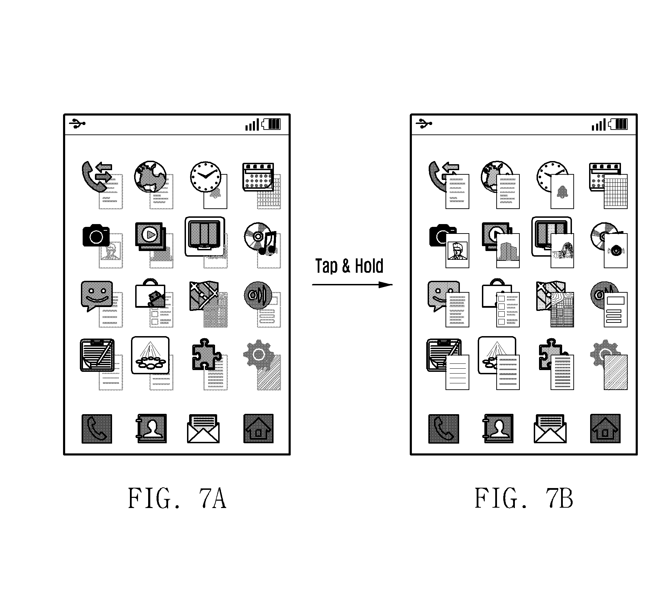

FIGS. 7A and 7Bare diagrams illustrating an example of a detailed graphic interface which displays a quick icon in an inactive state and changes the quick icon to an active state according to an exemplary embodiment of the present invention.

Referring to FIGS. 7A and 7B, according to an exemplary embodiment of the present invention, the quick icon may be displayed in an active/inactive state according to setting of the controller 160. The user may change the setting through a menu of the mobile terminal.

FIG. 7A illustrates an example of a graphic display which displays a quick icon in an inactive state. The inactive quick icon signifies a state in which a quick icon is not executed even if the user touches the quick icon. Such a state is necessary or otherwise desirable for convenience of a user and to protect the privacy of the user.

Although FIG. 7A displays the quick icon in a translucent state, exemplary embodiments of the present invention are not limited thereto. The controller 160 may display an inactive state by displaying the quick icon in a size that is smaller than a normal icon, or by displaying only the same symbol such as a dot. If a quick icon activation command is received in a state of FIG. 7A, the quick icon may be clearly displayed as illustrated in FIG. 7B. The activation command may be a touch input (e.g., tap and hold) which continues for a predetermined time as illustrated in FIGS. 7A and 7B. However, exemplary embodiments of the present invention are not limited thereto. For example, the controller 160 may set a touch input with respect to a predetermined point of a touch screen at which a quick icon in an inactive state is displayed and a drag input in a predetermine direction after the touch input as an activation command.

FIG. 7B illustrates an activated quick icon. The activated quick icon refers to a state capable of executing a quick icon when a user touches the quick icon. Although FIG. 7B displays the activated quick icon together with the normal icon, exemplary embodiments of the present invention are not limited thereto. For example, the activated quick icon may be displayed in various schemes.

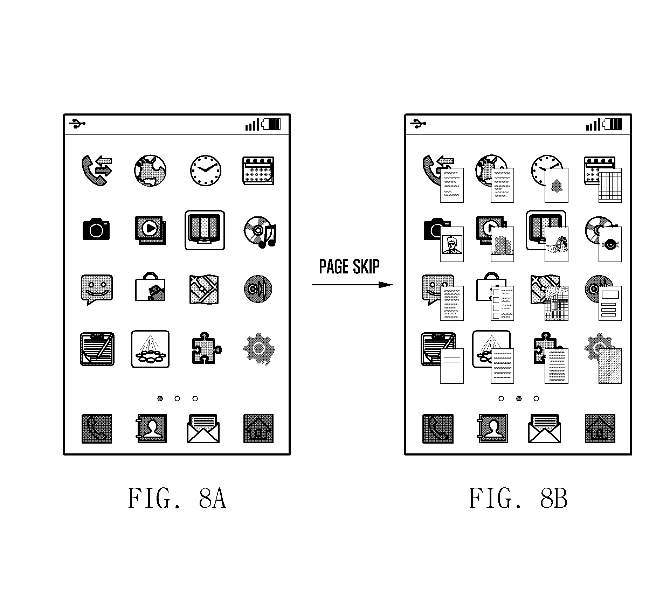

FIGS. 8A and 8Bare diagrams illustrating an example of a detailed graphic interface which displays a quick icon on a page different from a normal icon according to an exemplary embodiment of the present invention.

Referring to FIG. 8A, a state in which a normal icon is displayed in a predetermined page of a home screen is illustrated. In this case, a separate page other than the above page is generated by the controller 160 so that the quick icon may be displayed. Such a separate page may be necessary or otherwise desirable for convenience of a user and to protect a privacy of the user.

Referring to FIG. 8B a state in which a quick icon is displayed at the separate page together with the normal icon is illustrated. The user may recognize a page on which the quick icon is displayed through a page skip command of a home screen. Exemplary embodiments of the present invention are not limited to the state illustrated in FIG. 8B. For example, the controller 160 may control to display only a quick icon at a separate page. Further, the controller 160 may display an inactive quick icon at a separate page, and may receive an activation command to change the quick icon to an active state.

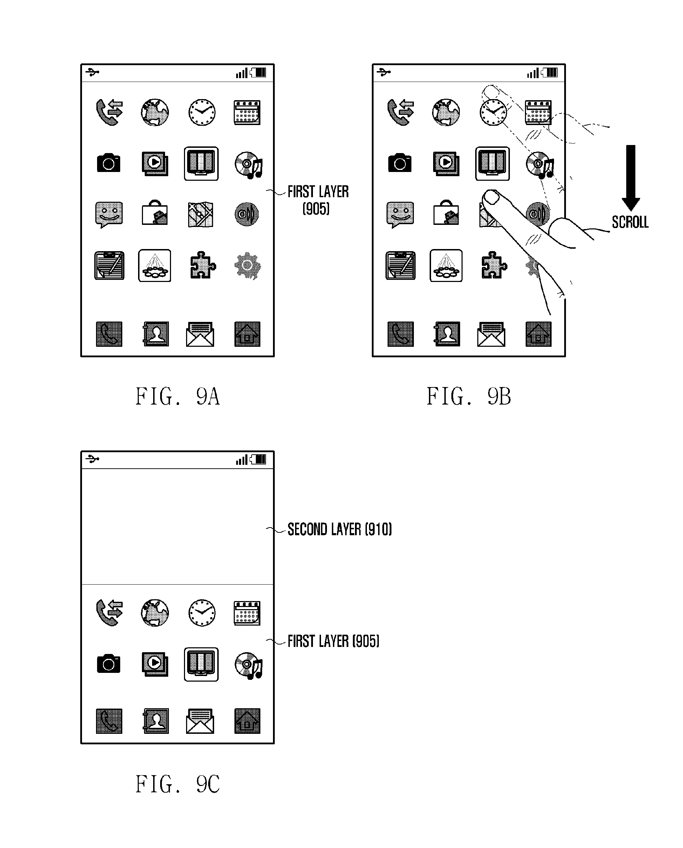

FIGS. 9A to 9C are diagrams illustrating an example of a detailed graphic interface which displays a quick icon on a layer different from a normal icon according to an exemplary embodiment of the present invention.

Referring to FIG. 9A, a state in which only normal icons of an application are displayed on a first layer 905 is illustrated. In this case, the user may recognize a second layer 910 on which a quick icon is displayed through a call command of a second layer.

Referring to FIG. 9B, the call command may be a drag input from a top end to a bottom end of a display screen on which a first layer 905 is displayed. However, exemplary embodiments of the present invention are not limited thereto. The controller 160 may set a touch input which continues with respect to a specific point for a predetermine time to the first layer 905 by a call command of a second layer.

Referring to FIG. 9C, a graphic interface in which a second layer 910 including a quick icon is displayed together with the first layer 905 is illustrated. As illustrated in FIG. 9C, the second layer 910 may be displayed so as to extend from a top end to a bottom end of the first layer 905. However, exemplary embodiments of the present invention are not limited thereto. For example, the controller 160 may include a pop-up form in which the first layer includes a second layer.

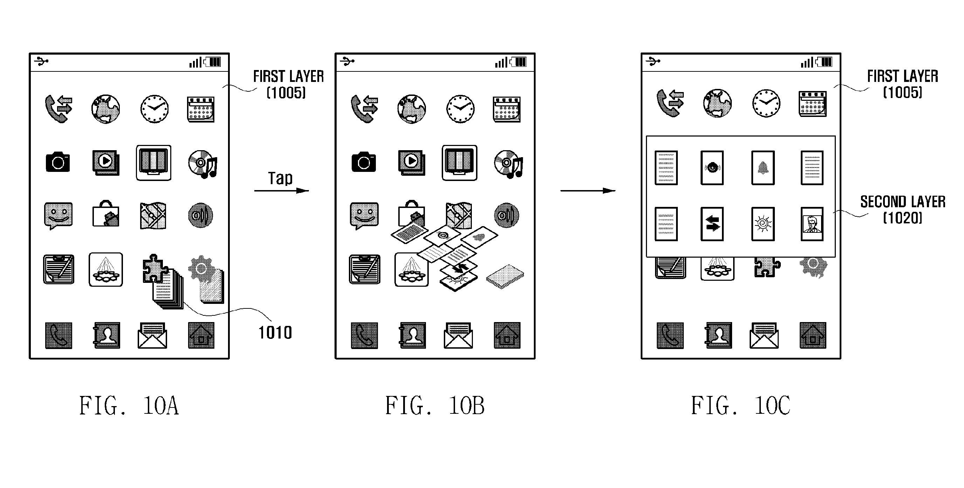

FIGS. 10A to 10C are diagrams illustrating an example of a detailed graphic interface which displays a plurality of quick icons connected to a predetermined execution state of an application in a stacked form and a lattice form according to an exemplary embodiment of the present invention.

Referring to FIG. 10A, a plurality of quick icons connected to a specific execution state of a specific application in a stacked form is illustrated. As described above, the controller 160 may generate a plurality of execution screens of an application as respective thumbnail images and convert the thumbnail image into a plurality of quick icons, and stack and display the quick icons as illustrated with reference to the stack of the plurality of quick icons 1010. In this case, the quick icons are connected to execution states of the application, respectively.

For example, when the user changes execution of a first sound source to execution of a second sound source in an application of a music player, the controller 160 may generate a first quick icon with respect to a specific execution state of the first sound source, and may generate a second quick icon with respect to a specific execution state of the second sound source.

As another example, when a user of an e-book application executes page 38 of a first electronic book and changes to execute page 20 of a second electronic book, the controller 160 generate a first quick icon with respect to the page 38 of a first electronic book, and may generate a second quick icon with respect to the page 20 of a second electronic book.

In this case, as shown in FIG. 10A, the controller 160 may display a plurality of quick icons 1010 in a stacked form.

Referring to FIG. 10B an example is illustrated of a graphic interface displaying respective icons by releasing the stacked form when an execution command of a quick icon 1010 displayed in the stacked form is received. However, exemplary embodiments of the present invention are not limited thereto. When an execution command of a quick icon 1010 in a stacked form is received from the user, the controller 160 may display so that respective quick icons may be displayed to continuously spread in a vertical direction with a predetermined angle. As an example, a bottom surface of the first quick icon may adhere to a top surface of a second quick icon which is continuously arranged.

Referring to FIG. 10C an example is illustrated of a graphic interface displaying a separate layer other than a first layer 1050 on which a normal icon is displayed including a plurality of quick icons with respect to a specific application. As illustrated in FIG. 10C, the controller 160 may display the graphic interface in a pop-up form in which the second layer 1020 is included in the first layer 1005. However, exemplary embodiments of the present invention are not limited thereto. For example, the controller 160 may display the second layer 1020 extend from a top end to a bottom end of the first layer 1010. For example, the second layer 1020 may progressively extend or be displayed as moving from a top end to a bottom end of the first layer 1010.

According to exemplary embodiments of the present invention, a final execution screen of an application by a quick icon together with a normal icon of an application. Further, according to exemplary embodiments of the present invention, when an execution command with respect to the quick icon is received, the final execution screen can be displayed according to an execution path connected to the quick icon. Therefore, in the execution of the application, convenience of a user can be increased and the user can intuitively recognize an execution state of the application.

It will be appreciated that exemplary embodiments of the present invention according to the claims and description in the specification can be realized in the form of hardware, software or a combination of hardware and software.

Any such software may be stored in a non-transitory computer readable storage medium. The non-transitory computer readable storage medium stores one or more programs (software modules), the one or more programs comprising instructions, which when executed by one or more processors in an electronic device, cause the electronic device to perform a method of the present invention.

Any such software may be stored in the form of volatile or non-volatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disk (CD), Digital Versatile Disc (DVD), magnetic disk or magnetic tape or the like. It will be appreciated that the storage devices and storage media are exemplary embodiments of machine-readable storage that are suitable for storing a program or programs comprising instructions that, when executed, implement exemplary embodiments of the present invention. Accordingly, exemplary embodiments provide a program comprising code for implementing apparatus or a method as claimed in any one of the claims of this specification and a machine-readable storage storing such a program.

While the invention has been shown and described with reference to certain exemplary embodiments thereof, it will be understood by those skilled in the art that various changes in form and details may be made therein without departing from the spirit and scope of the invention as defined in the appended claims and their equivalents.

## Claims

1. A method of displaying icons in a mobile terminal, the method comprising:
displaying an application execution screen;
receiving a display termination command with respect to an application; and
generating a thumbnail image with respect to an execution screen of the application when the display termination command is received;
converting the thumbnail image to a quick icon; and
displaying the quick icon.

2. The method of claim 1, further comprising:
receiving an execution command with respect to the quick icon; and
displaying the execution screen of the application when the display termination command is received.

3. The method of claim 2, wherein the displaying of the quick icon comprises displaying the quick icon in association with a normal icon of the application.

4. The method of claim 2, wherein the displaying of the quick icon comprises substituting the normal icon of the application with the quick icon.

5. The method of claim 2, wherein the displaying of the quick icon comprises:
transparently displaying the quick icon;
receiving an activation command with respect to the transparently displayed quick icon; and
activating the quick icon to be clearly displayed.

6. The method of claim 2, wherein the displaying of the quick icon comprises:
displaying the normal icon of the application on a predetermined page of a home screen; and
displaying the quick icon on a separate page.

7. The method of claim 2, wherein the displaying of the quick icon comprises:
displaying a normal icon of the application on a first layer;
receiving a second layer call command;
generating a second layer from one side of the first layer; and
displaying the second layer including the quick icon.

8. The method of claim 2, wherein the displaying of the quick icon comprises:
generating at least one thumbnail image with respect to the execution screen of the application;
generating quick icons with respect to the at least one thumbnail image;
displaying the generated quick icons on a first layer in a stacked form;
receiving a selection command with respect to the quick icons in the stacked form;
generating the second layer at a part of the first layer; and
arranging and displaying the quick icons on the second layer in a lattice form.

9. A mobile terminal for displaying icons, the mobile terminal comprising:
a display unit for displaying an application execution screen; and
a controller for determining whether a display termination command with respect to the application is received, for generating a thumbnail image with respect to an execution screen of the application when the display termination command is received, for converting the generated thumbnail image to a quick icon, and for controlling to display the quick icon.

10. The mobile terminal of claim 9, wherein the controller determines whether an execution command with respect to the quick icon is received, and controls to display the execution screen of the application when the display termination command is received.

11. The mobile terminal of claim 10, wherein the controller controls to display the quick icon in association with a normal icon of the application.

12. The mobile terminal of claim 10, wherein the controller substitutes the normal icon of the application with the quick icon.

13. The mobile terminal of claim 10, wherein the controller controls to transparently display the quick icon, determines whether an activation command with respect to the transparently displayed quick icon is received, and controls to activate the quick icon to be clearly displayed when the activation command is received.

14. The mobile terminal of claim 10, wherein the controller controls to display the normal icon of the application on a predetermined page of a home screen, and to display the quick icon on a separate page.

15. The mobile terminal of claim 10,
wherein the controller controls to display a normal icon of the application on a first layer, determines whether a second layer call command is received, generates a second layer from one side of the first layer when the second layer call command is received, and controls to display the second layer including the quick icon, and
wherein the controller generates at least one thumbnail image with respect to the execution screen of the application, generates quick icons with respect to the at least one thumbnail image, controls to display the generated quick icons on a first layer in a stacked form, determines whether a selection command with respect to the quick icons in the stacked form is received, generates the second layer at a part of the first layer when the selection command is received, and controls to arrange and display the quick icons on the second layer in a lattice form.
